# EUROPÄISCHE PATENTSCHRIFT

(11) **EP 2 807 107 B1**
(45) Veröffentlichungstag und Bekanntmachung des Hinweises auf die Patenterteilung: **16.03.2016**
(21) Anmeldenummer: 12810221.7
(22) Anmeldetag: 18.12.2012
(51) Int. Cl.: B66C 1/10, F03D 1/00

(54) **VERFAHREN UND VORRICHTUNG ZUM MONTIEREN EINER ROTORNABE EINER WINDENERGIEANLAGE**
METHOD AND APPARATUS FOR INSTALLING A ROTOR HUB OF A WIND POWER PLANT
PROCEDE ET DISPOSITIF POUR L'INSTALLATION D'UN MOYEU DE ROTOR D'UNE EOLIENNE

(30) Priorität: 25.01.2012 DE 102012201088
(43) Veröffentlichungstag der Anmeldung: 03.12.2014
(73) Patentinhaber: Wobben Properties GmbH, 26607 Aurich (DE)
(72) Erfinder: KNOOP, Frank, 26607 Aurich (DE); KUIPER, Gerrit, 26607 Aurich (DE)
(74) Vertreter: Eisenführ Speiser
(86) Internationale Anmeldenummer: PCT/EP2012/076021
(87) Internationale Veröffentlichungsnummer: WO 2013/110417

(56) Entgegenhaltungen:
- EP-A1- 2 525 092
- EP-A2- 2 072 812
- WO-A1-2008/000267
- WO-A2-2008/089763
- WO-A2-2011/026970
- US-A1- 2011 220 538

## Beschreibung

Die vorliegende Erfindung betrifft eine Rotornabe einer Windenergieanlage sowie eine Handhabungsvorrichtung zum Handhaben der Rotornabe, und die Erfindung betrifft ein Verfahren zum Handhaben, insbesondere Montieren, einer Rotornabe einer Windenergieanlage.

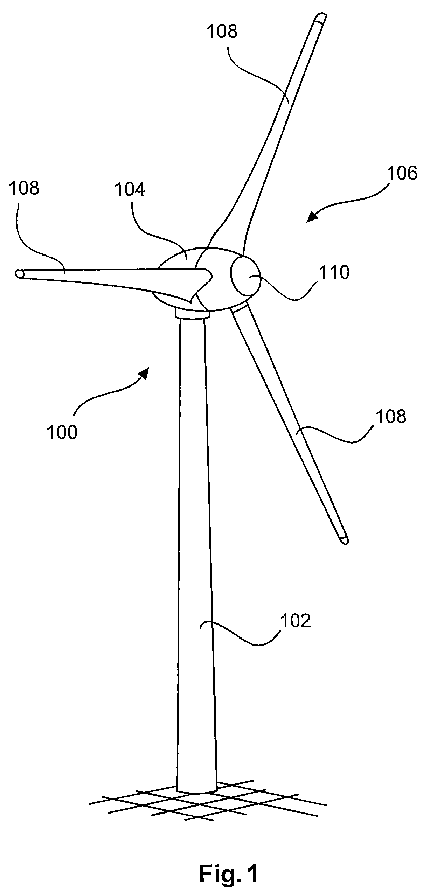

Rotornaben von Windenergieanlagen sind bekannt, sie tragen eine oder mehrere, insbesondere drei Rotorblätter und bilden zusammen mit den Rotorblättern im Wesentlichen einen Rotor der Windenergieanlage. Die Rotornabe und damit ein solcher zusammengesetzter Rotor sind um eine Rotorachse drehbar an einer Gondel gelagert. Je nach Aufbau kann die Rotornabe als Teil der Gondel verstanden werden und ist entsprechend an einem Gondelteil drehbar gelagert. Insbesondere bezieht sich die vorliegende Erfindung auf sog. Horizontalachsen-Windenergieanlagen, bei denen die Rotorachse im Wesentlichen horizontal angeordnet ist. Dabei kommt es auf leichte Kippstellungen dieser Rotorachse gegenüber der Horizontalen nicht an. Eine solche Windenergieanlage ist schematisch in der Fig. 1 gezeigt.

Die Montage einer Windenergieanlage eines solchen Typs, insbesondere bei größerer Bauart, beinhaltet den Schritt, eine Rotornabe an einer bereits auf einem Turm oder Mast montierten Gondel bzw. Gondelteil zu montieren. Hierzu wird die Rotornabe üblicherweise mit senkrechter Nabenachse am Aufstellungsort der Windenergieanlage angeliefert. Beispielsweise kann die Nabe auf einem Tieflader angeliefert werden.

Zum Montieren wird die Nabe bzw. Rotornabe, was nachfolgend als äquivalente Bezeichnung angesehen werden kann, angehoben und muss dann so gedreht werden, dass die Nabenachse aus ihrer senkrechten Ausrichtung in eine etwa waagerechte Ausrichtung geändert wird. Dabei ist zu beachten, dass eine solche Nabe einer modernen Windenergieanlage viele Tonnen, oftmals über 30 t oder über 50 t, wiegen kann. Dieses Drehen ist somit keine einfache Aufgabe. Sofern die Drehung der Nabe in der Nähe des Bodens bzw. des Tiefladers erfolgt, besteht die Gefahr, dass durch die Drehung Beschädigungen insbesondere an Verkleidungselementen der Nabe auftreten können.

Um solche Beschädigungen zu vermeiden, wird die Nabe ganz oder teilweise ohne Verkleidungselemente bereitgestellt. Eine andere oder ergänzende Möglichkeit besteht darin, die Nabe bereits mit einer waagerecht ausgerichteten Nabenachse anzuliefern. Hierfür bedarf es aber eines großen Aufwandes, die Nabe in einer solchen Ausrichtung auf dem Transportfahrzeug sicher zu platzieren und zu befestigen. Häufig ist dabei die Nabe nicht dazu ausgelegt, ihr eigenes Gewicht in einer Position mit horizontal ausgerichteter Nabenachse selbst zu tragen, wenn sie nicht an der Gondel montiert, sondern auf einem Fahrzeug oder dergleichen aufgesetzt ist.

Grundsätzlich kann auch eine Gondel mit installierter Nabe zum Aufstellungsort transportiert werden. Solche Lösungen sind aber für größere Windenergieanlagen wie beispielsweise mit einer Nennleistung von 1 Megawatt oder mehr kaum praktikabel oder sogar unmöglich. Insbesondere ist hierbei häufig das Gesamtgewicht der Gondel mit Nabe und damit auch mit Generator so groß, dass es schwierig zu transportieren und auch insbesondere schwierig von einem Kran in die gewünschte Höhe zu heben ist. Hinzu kommt, dass auch die Größe einer solchen fertigen Gondel Probleme beim Straßentransport bildet. Insbesondere bei getriebelosen Windenergieanlagen und hier insbesondere bei der oben genannten Größe ergibt sich regelmäßig eine für den Straßentransport ungeeignete Baugröße.

Das deutsche Patent- und Markenamt hat in der Prioritätsanmeldung folgenden Stand der Technik recherchiert: DE 10 2007 062 428 A1.

WO 2008/089763 A offenbart eine Rotornabe und Handhabungsvorrichtung gemäß dem Oberbegriff der Ansprüche 1 und 7.

Aufgabe der vorliegenden Erfindung ist es somit, wenigstens eines der genannten Probleme zu adressieren. Insbesondere soll eine Lösung geschaffen werden, die das Errichten einer Windenergieanlage, insbesondere das Handhaben einer Nabe einer Windenergieanlage, zu verbessern. Zumindest soll eine alternative Lösung geschaffen werden.

Erfindungsgemäß wird somit eine Rotornabe nach Anspruch 1 vorgeschlagen. Eine solche für eine Windenergieanlage vorgesehene Rotornabe ist mit einer Handhabungsvorrichtung zum Heben der Rotornabe mittels eines Krans ausgestaltet. Die Handhabungsvorrichtung ist dabei zum Heben und Montieren der Rotornabe an einer auf einem Windenergieanlagenturm angeordneten Gondel vorgesehen. Dabei ist sie dazu vorbereitet, dass sich die Rotornabe beim Anheben, wenn sie an einem Befestigungsabschnitt der Handhabungsvorrichtung angehoben wird, von einer senkrechten Ausrichtung in eine waagerechte Ausrichtung bringt. Eine senkrechte Ausrichtung betrifft hierbei eine solche, bei der die Nabenachse im Wesentlichen senkrecht steht, und eine waagerechte Ausrichtung ist eine solche, bei der die Nabenachse im Wesentlichen horizontal steht. Insbesondere dreht sich die Rotornabe beim Abheben vom Boden, Tieflader oder anderen Unterlagen aus ihrer senkrechten Ausrichtung in die waagerechte Ausrichtung. Dabei erfolgt die Drehung so, dass die Rotornabe dabei keinen Schaden nimmt.

Die Handhabungsvorrichtung ist dabei fest mit der Rotornabe verbunden, so dass daran die Rotornabe gehoben werden kann, nämlich an dem Befestigungsabschnitt der Handhabungsvorrichtung, und dass dadurch die beschriebene Drehung geführt wird, also von der Handhabungsvorrichtung geführt wird.

Vorzugsweise weist die Rotornabe wenigstens einen Blattanschluss zum Befestigen eines Rotorblatts daran auf. Die Befestigung des Rotorblatts kann dabei direkt oder indirekt, beispielsweise über einen zwischengeschalteten Blattadapter, vorgenommen werden. Hierzu weist der Blattanschluss einen Ringflansch auf, und der Befestigungsabschnitt der Handhabungsvorrichtung ist so in oder an der Rotornabe angeordnet, dass zum Anheben und Drehen der Rotornabe von der senkrechten in die waagerechte Ausrichtung ein Hebezeug eines Krans durch die Rotorblattöffnung hindurch an dem Befestigungsabschnitt befestigt wird. Hierfür ist der Befestigungsabschnitt entsprechend mittels der Handhabungsvorrichtung an der Rotornabe befestigt, insbesondere ist der Befestigungsabschnitt an dem Blattanschluss befestigt. Das Hebezeug, was im einfachsten Fall ein Kranhaken mit entsprechendem Kranseil oder entsprechender Krankette sein kann, reicht entsprechend senkrecht vom Kran zum Hebeabschnitt und berührt dabei die Rotornabe ansonsten nicht oder nicht wesentlich. Beim Anheben, wenn sich die Rotornabe von der senkrechten in die waagerechte Ausrichtung dreht, berührt das Hebezeug die Rotornabe im Wesentlichen ebenso wenig, so dass die Drehbewegung nicht behindert wird und eine Beschädigung der Rotornabe über eine Berührung mit dem Hebezeug vermieden wird. Insbesondere wird das Hebezeug von dem Befestigungsabschnitt aus nicht von anderen Elementen der Rotornabe, insbesondere nicht von dem Ringflansch, umgeleitet. In einem solchen Falle würde nämlich die Gewichtskraft der Nabe über das Hebezeug des Krans auf die entsprechende Stelle an dem Ringflansch zumindest teilweise übertragen werden, was zu Beschädigungen führen könnte.

Insoweit weist die Rotornabe vorzugsweise eine Nabenverkleidung auf, die wenigstens eine Rotorblattöffnung zum Durchführen eines Rotorblattes aufweist. Insbesondere sind drei Rotorblattöffnungen für drei Rotorblätter einer Windenergieanlage mit drei Rotorblättern vorgesehen. Entsprechend ist eine solche Rotorblattöffnung der Nabenverkleidung jeweils einem Blattanschluss und damit dem jeweiligen Ringflansch zugeordnet. Entsprechend ist die Rotorblattöffnung dazu vorgesehen, dass durch sie hindurch ein Rotorblatt bzw. ein Blattadapter hindurch zum Blattanschluss geführt und dort befestigt wird. Zum Heben der Rotornabe allein, nämlich ohne Rotorblätter, wird vorgeschlagen, einen Teil der Handhabungsvorrichtung, nämlich deren Befestigungsabschnitt, an einem der Blattanschlüsse zu befestigen und daran die Rotornabe zu heben. Hierbei kann der Befestigungsabschnitt durch die betreffende Rotorblattöffnung der Nabenverkleidung ragen oder ein Hebezeug des Krans reicht durch die Rotorblattöffnung zumindest teilweise hindurch zu dem Befestigungsabschnitt. Jedenfalls besteht schließlich eine Verbindung zwischen Kran und Rotornabe durch diese Rotorblattöffnung hindurch. Dabei berührt das Hebezeug die Nabenverkleidung weder in der waagerechten noch in der senkrechten Ausrichtung der Rotornabe und auch nicht in dem Übergangsbereich dazwischen, wenn die Rotornabe von der senkrechten in die waagerechte Ausrichtung gedreht wird.

Ein Vormontagegestell zum Tragen der Rotornabe in der senkrechten Ausrichtung darauf mit einem Gelenkabschnitt zum Führen der Drehung der Rotornabe von der senkrechten Ausrichtung in die waagerechte Ausrichtung ist vorgesehen. Dieses Vormontagegestell ist als Teil der Handhabungsvorrichtung vorgesehen. Der Gelenkabschnitt wirkt als Schwenkachse bzw. stellt eine solche bereit, so dass die Nabe sich um diese Schwenkachse des Gelenkabschnitts drehen kann, während sie angehoben wird. Gleichzeitig findet eine Drehung am Befestigungsabschnitt statt. Gleichzeitig stützt sich die Rotornabe bei der Drehung an dem Gelenkabschnitt auf eine Unterlage ab, die Teil des Vormontagegestells sein kann und/oder über den Gelenkabschnitt mit dem Vormontagegestell verbunden sein kann. Zweckmäßigerweise wird ein Teil der Handhabungsvorrichtung von der Rotornabe gelöst, sobald die Rotornabe beim Anheben ihre waagerechte Ausrichtung erreicht hat und vollständig oder fast vollständig am Kran hängt.

Vorzugsweise ist das Vormontagegestell an einem konzentrisch zur Nabenachse angeordneten Ringflansch befestigt, an dem bei der Montage an der Gondel die Nabe mit dem Läufer eines Generators zu verbinden ist. Aus diesem Grunde wird dieser ringförmige Flansch nachfolgend als Läuferflansch bezeichnet. Dieser Läuferflansch ist somit in seinem bestimmungsgemäßen Gebrauch in der Windenergieanlage dazu vorgesehen, die Nabe einschließlich daran befestigter Rotorblätter mit einem Läufer zu verbinden, so dass der Läufer das Gewicht der Nabe mit montierten Rotorblättern, also das Gewicht des gesamten Rotors, daran trägt. Somit kann das Vormontagegestell die Nabe an diesem Läuferflansch tragen und ist somit an diesem befestigt.

Vorzugsweise ist die Rotornabe zum festen Verbinden mit einem Läufer eines Generators einer getriebelosen Windenergieanlage vorbereitet. Die Rotornabe ist also an eine getriebelose Windenergieanlage angepasst. Entsprechend ist die Nabe nicht in Verbindung mit einer Rotorwelle zur Verbindung mit einem Getriebe vorgesehen, sondern für eine direkte Verbindung mit dem Läufer eines Generators. Dies hat Konsequenzen für die Ausgestaltung der Nabe, insbesondere der bereits beschriebene Läuferflansch spiegelt eine solche Verbindung in einer getriebelosen Windenergieanlage wider. Des Weiteren ist insbesondere für eine solche Rotornabe ein Transport mit waagerechter Nabenachse schwierig und stattdessen ein senkrechter Transport vorteilhaft, bei dem das Gewicht der Nabe auf dem Läuferflansch lastet. Eine solche Nabe ist entsprechend bei der Montage aus ihrer senkrechten in die gewünschte waagerechte Ausrichtung zu drehen.

Vorzugsweise ist die Rotornabe mit einer Nabenverkleidung versehen und die Handhabungsvorrichtung ist so ausgestaltet, dass die Nabenverkleidung bei dem Drehen von der senkrechten in die waagerechte Ausrichtung nicht beschädigt wird. Insbesondere ist die Handhabungsvorrichtung so vorgesehen, dass die Nabenverkleidung keinen Kontakt mit dem Boden hat, auf dem sie steht, und keinen Kontakt mit dem Hebezeug hat, das an dem Befestigungsabschnitt befestigt ist, während die Rotornabe von ihrer senkrechten in die waagerechte Ausrichtung gedreht wird. Insbesondere ist der Befestigungsabschnitt so ausgestaltet, dass er direkt von dem Hebezeug des Krans erreicht werden kann, sowohl in der waagerechten als auch in der senkrechten Ausrichtung und in dem Übergangsbereich zwischen diesen beiden Ausrichtungen. Weiterhin ist die Handhabungsvorrichtung so ausgestaltet, dass sich die Rotornabe beim Drehen von der senkrechten in die waagerechte Ausrichtung so mit einem Teil der Handhabungsvorrichtung an einem Boden abdrückt, dass ein entsprechender Abstand zwischen Nabenverkleidung und Boden gewährleistet wird. Hierbei kann der Boden auch die Auflagefläche auf dem Transportfahrzeug bilden oder ein anderes Gestell, auf dem die Rotornabe vor Ort bereit gestellt wird.

Vorzugsweise umfasst die Rotornabe neben der Handhabungsvorrichtung einen Schleifringkörper zum Übertragen elektrischer Signale zwischen der Rotornabe und der Gondel und/oder eine Spinnerkappe. Der Schleifringkörper und/oder die Spinnerkappe sind somit vorinstalliert. Sie sind gleichzeitig mit der Handhabungsvorrichtung an der Rotornabe installiert und somit bereits beim Drehen der Rotornabe vorhanden. Die Verwendung einer Rotornabe mit Handhabungsvorrichtung ermöglicht diese Vorinstallation, weil insbesondere die schwierige Drehung der Rotornabe aus der senkrechten in die waagerechte Ausrichtung so gut vorbereitet und vorher festgelegt ist, dass solche vorinstallierten Elemente nicht Gefahr laufen, Schaden zu nehmen.

Darüber hinaus ist es somit auch möglich, die Rotornabe mit vollständiger Verkleidung vorzusehen, also Rotornabenverkleidung einschließlich Spinnerkappe, nämlich der vorderste Teil der Verkleidung, der an der Spitze der Rotornabe angeordnet ist. Mit einer solchen vollständig vorinstallierten Verkleidung der Rotornabe ist diese bereits bei der Anlieferung gegen Witterungseinflüsse geschützt, so dass weitere Elemente, einschließlich des genannten Schleifringkörpers, vorinstalliert werden können, ohne der Witterung ausgesetzt zu sein.

Ebenfalls wird vorgeschlagen, eine Handhabungsvorrichtung gemäß Anspruch 8 bereit zu stellen. Eine solche Handhabungsvorrichtung ist zur Verwendung mit einer Rotornabe vorgesehen, so dass die Handhabungsvorrichtung an der Rotornabe zu installieren ist, so dass sich dadurch eine Rotornabe ergibt, wie sie oben in wenigstens einer der Ausführungsformen beschrieben wurde.

Weiterhin wird ein Transportfahrzeug vorgeschlagen, das eine Handhabungsvorrichtung aufweist, wie sie oben beschrieben wurde. Die Handhabungsvorrichtung kann hierbei auf dem Transportfahrzeug angeordnet sein, im Sinne einer Ladung, oder sie kann Teil des Transportfahrzeugs sein. Insbesondere wird vorgeschlagen, dass das Transportfahrzeug einen Transportgelenkabschnitt aufweist, der mit dem Gelenkabschnitt der Handhabungsvorrichtung zum Führen der Drehung der Rotornabe zusammenwirkt. Hierdurch wird erreicht, dass die Rotornabe mit ihrer Handhabungsvorrichtung auf dem Transportfahrzeug, wie beispielswiese einem Tieflader, bereit gestellt wird und beim Anheben ein Schwenkgelenk besteht, das eine geführte Schwenkbewegung zwischen Handhabungsvorrichtung und Transportfahrzeug schafft und damit eine geführte Schwenkbewegung zwischen Rotornabe und Transportfahrzeug schafft. Das Transportfahrzeug kann sowohl ein straßentaugliches Transportfahrzeug sein als auch ein Spezialtransportfahrzeug, das lediglich zum Transport der Rotornabe - und ggf. anderer Elemente der Windenergieanlage - von einer nahegelegenen, temporären Endfertigungsstelle zum Aufstellungsort verwendet wird. Ein solches Transportfahrzeug ist gemäß einer Ausführungsform ein Schienenfahrzeug oder ein Kettenfahrzeug.

Ebenfalls wird ein Verfahren zum Montieren einer Rotornabe einer Windenergieanlage gemäß Anspruch 11 vorgeschlagen. Dieses Verfahren umfasst die Schritte:
- Bereitstellen einer Rotornabe in einer senkrechten Ausrichtung mit senkrechter Nabenachse,
- Befestigen eines Hebezeugs eines Krans an einem Befestigungsabschnitt einer Handhabungsvorrichtung der Rotornabe,
- Heben der Rotornabe unmittelbar aus der senkrechten Ausrichtung so, dass sich die Rotornabe beim Anheben aus der senkrechten Ausrichtung in eine waagerechte Ausrichtung mit horizontaler Nabenachse dreht, und
- Montieren der Rotornabe an einer auf einem Turm oder Mast angeordneten Gondel.

Hierdurch wird eine gut handhabbare Montagelösung vorgeschlagen.

Vorzugweise verwendet ein solches Verfahren zum Montieren der Rotornabe eine Rotornabe, wie sie oben in wenigstens einer der Ausführungsformen beschrieben wurde. Vorzugsweise ist dabei ein Schleifringkörper, eine Spinnerkappe und/oder eine Nabenverkleidung vorinstalliert.

Nachfolgend wird die Erfindung beispielhaft anhand von Ausführungsformen unter Bezugnahme auf die begleitenden Figuren näher erläutert.
- Fig. 1: zeigt eine Windenergieanlage in einer perspektivischen Ansicht.
- Fig. 2: zeigt eine Rotornabe in senkrechter Ausrichtung auf einem Vormontagegestell und mit befestigtem Hebezeug eines Krans.
- Fig. 3: zeigt eine Rotornabe in einer horizontalen Ausrichtung, die gegenüber der in Fig. 2 gezeigten gedreht ist.
- Fig. 4: zeigt eine Rotornabe in einer horizontalen Ausrichtung gemäß der Fig. 3 aber in einer anderen Perspektive.

Nachfolgend können identische Bezugszeichen ähnliche, aber nicht identische Elemente bezeichnen, um das Verständnis der Funktionalität zu erhöhen. Die Figuren können gleiche Elemente in unterschiedlichem Maßstab zeigen.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

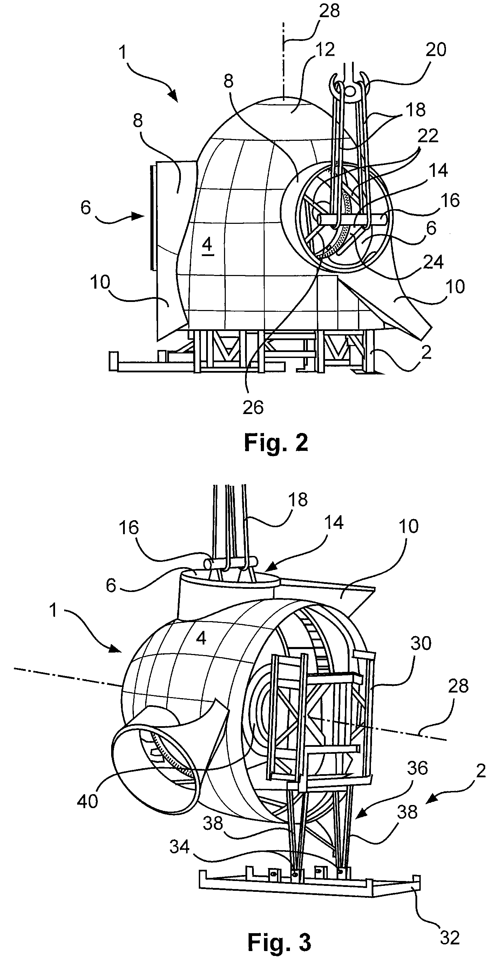

Fig. 2 zeigt eine Rotornabe 1, die auf einem Vormontagegestell 2 gelagert ist, das einen Teil einer Handhabungsvorrichtung zum Handhaben der Rotornabe 1 bildet. Die Rotornabe 1 ist dabei mit einer Nabenverkleidung bzw. Rotornabenverkleidung 4 versehen. Die Rotornabe 1 ist zur Verwendung mit einer Windenergieanlage mit drei Rotorblättern vorgesehen. Entsprechend weist auch die Nabenverkleidung 4 drei Rotorblattöffnungen 6 auf, von denen eine gut zu erkennen ist. Von einer weiteren Rotorblattöffnung 6 ist ein Öffnungsmantel 8 in einer seitlichen Ansicht zu erkennen. Weiterhin ist jeder Rotorblattöffnung 6 und jedem Öffnungsschaft 8 ein Rotorblattansatz 10 zugeordnet. Dieser Rotorblattansatz 10 ist Teil der Nabenverkleidung und soll bestimmungsgemäß aber mit einem eingesetzten Rotorblatt korrespondieren.

Die Rotornabe 1 weist außerdem bereits eine aufgesetzte Spinnerkappe 12 auf, die die Nabenverkleidung 4 vervollständigt.

Ein Befestigungsabschnitt 14 ist im Wesentlichen in einer der Rotorblattöffnungen 6 zu erkennen. Der Befestigungsabschnitt 14 weist eine Tragstrebe 16 zum Befestigen eines Hebezeugs 18 auf. Das Hebezeug 18 ist an einem Kranhaken 20 eingehängt und umläuft die Tragstrebe 16.

Der Befestigungsabschnitt 14 und damit auch die Tragstrebe 16 sind über eine Befestigungskonstruktion 22 an einem Ringflansch 24 der Nabe 1 befestigt. Von dem Ringflansch 24, der ein Blattanschluss zum Befestigen eines Rotorblattes ist, erstreckt sich der Befestigungsabschnitt 14 mittels der Befestigungskonstruktion 22, die im Wesentlichen vier Befestigungsstreben 26 aufweist, durch die Rotorblattöffnung 6 der Nabenverkleidung 4 hindurch, so dass die Tragstrebe 16 gerade außerhalb der Nabenverkleidung, nämlich außerhalb der einen Rotorblattblattöffnung 6, angeordnet ist. In dieser Position ist unmittelbar das Hebezeug 18 befestigt, das sich senkrecht vom Kranhaken zur Tragstrebe 16 erstreckt. Das Hebezeug 18 berührt hierbei nicht bzw. nicht wesentlich die Nabenverkleidung 4 und vermeidet dadurch Beschädigungen der Verkleidung in diesem Abschnitt durch den Kran, insbesondere durch das Hebezeug 18.

Die in Fig. 2 gezeigte Position zeigt eine senkrechte Ausrichtung der Rotornabe 1 und damit ihrer Nabenachse 28. Diese Position bildet im Grunde die Anfangsposition nach der Anlieferung der Rotornabe 1 vor dem Anheben der Rotornabe 1 durch einen Kran. Das nachfolgende Anheben mit Drehen der Rotornabe 1 wird somit durch den Befestigungsabschnitt 14 und das Vormontagegestell 2 vorbereitet. Das Vormontagegestell 2 führt zu einem Großteil die nachfolgende Drehbewegung und kann daher auch als Hebevorrichtung bezeichnet werden. Insoweit kann das Vormontagegestell auch als Aufrichtvorrichtung bezeichnet werden bzw. einen Teil der Aufrichtvorrichtung bilden.

Fig. 3 zeigt die Rotornabe 1 in einer von einem Montagekran angehobenen Ausrichtung. Die Nabenachse 28 ist hierbei etwa waagerecht ausgebildet. Eine Abweichung von einer waagerechten bzw. horizontalen Ausrichtung der Nabenachse 28 ist so gering, dass die gezeigte Ausrichtung immer noch als Ausrichtung mit einer im Wesentlichen waagerechten Nabenachse 28 bezeichnet werden kann. Es ist zu beachten, dass die scheinbare Schrägstellung der Nabenachse 28 der Fig. 3 zum Teil auch durch die gewählte Perspektive begründet ist, oder auch durch den voreingestellten Achswinkel der Anlage.

In der Fig. 3 ist zu erkennen, dass der Befestigungsabschnitt 14 mit seiner Tragstrebe 16 vollständig aus der Nabenverkleidung 4 und damit aus der Rotorblattöffnung 6 herausragt. Die Rotornabe 8 hat sich somit von der senkrechten Ausrichtung gemäß Fig. 2 in die waagerechte Ausrichtung gemäß Fig. 3 gedreht, ohne dass das Hebezeug 18 die Nabenverkleidung 4 berührt.

Die Fig. 3 zeigt deutlich, dass das Montagegestellt 2 ein Nabengestell 30 und einen Tragrahmen 32 aufweist. Das Nabengestell 30 ist mittels eines Gelenkabschnitts 34 schwenkbar an dem Tragrahmen 32 gelagert. Der Gelenkabschnitt 34 weist dabei zwei einzelne Gelenke auf. Beim Anheben aus der senkrechten Ausrichtung gemäß Fig. 2 stützt sich die Rotornabe 1 mittels des Vormontagegestells 2 am Boden ab, indem das Nabengestell 30 an der Rotornabe 1 befestigt ist und eine Schwenkbewegung mittels des Gelenkabschnitts 34 führt.

Die dargestellte Ausführungsform beinhaltet den Befestigungsabschnitt 16 und das Vormontagegestell 2 mit dem Nabengestell 30 und dem Tragrahmen 32. Grundsätzlich kann auch der Befestigungsabschnitt Teil einer Rotornabe sein. Der Tragrahmen 32 kann in einer Ausführungsform als separates Element vorgesehen sein, an dem sich das Nabengestell 30 oder ein ähnliches Nabengestell abstützt. Beispielsweise kann der Tragrahmen 32 Teil eines Transportfahrzeugs sein, insbesondere Teil eines Spezialtransportfahrzeugs, das grundsätzlich nicht für das Fahren auf öffentlichen Straßen vorgesehen ist.

Die Drehbewegung aus der senkrechten Ausrichtung gemäß Fig. 2 in die waagerechte Ausrichtung gemäß Fig. 3 verwendet den Gelenkabschnitt 34. Dabei weist das Nabengestell 30 und damit das Vormontagegestell 2 und damit die Handhabungsvorrichtung insgesamt eine ausladende Konstruktion 36 auf, die zwei Seitenarme 38 aufweist. Diese Seitenarme 38 und damit die ausladende Konstruktion 36 stehen quer zur Nabenachse 28 über die Nabenverkleidung 4 über. Dadurch kann die Drehbewegung von der senkrechten Ausrichtung der Fig. 2 in die waagerechte Ausrichtung der Fig. 3 allein durch Anheben der Rotornabe 1 an dem Befestigungsabschnitt 14 erfolgen, ohne dass die montierte Nabenverkleidung 4 dabei Schaden nimmt.

Das Nabengestell 30 ist an einem Läuferflansch 40 befestigt und wird in der teilweise angehobenen Situation gemäß Fig. 3 gelöst werden. Der Läuferflansch 40 ist dann frei und kann dazu dienen, die Rotornabe 1 an einem entsprechenden Gegenflansch in der Gondel der zu installierenden Windenergieanlage zu befestigen. Der Befestigungsabschnitt 14 kann entfernt werden, sobald die Rotornabe 1 fest an der zu errichtenden Windenergieanlage, insbesondere an einem entsprechenden Läufer des Generators, befestigt ist. Der Befestigungsabschnitt 14 kann auch als zu der Handhabungsvorrichtung separates Element verstanden werden.

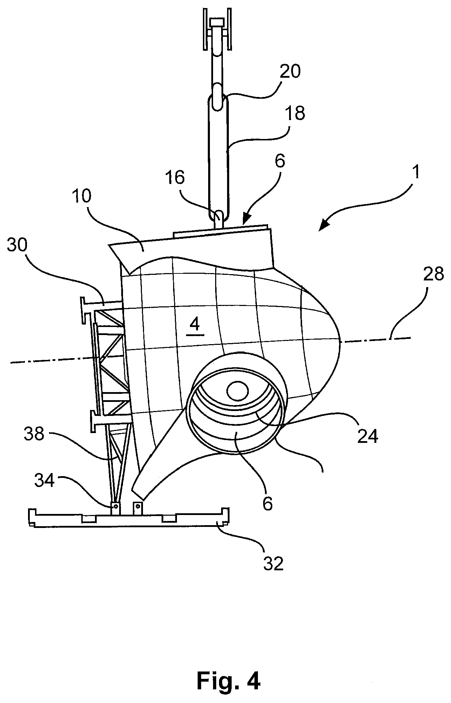

Die Fig. 4 zeigt schließlich eine Rotornabe 1 in der Ausrichtung gemäß Fig. 3. Diese Ausrichtung kann auch als Montageposition bezeichnet werden.

Somit wird eine Handhabungsvorrichtung vorgeschlagen, die auch als Aufrichtevorrichtung bezeichnet werden kann, die dazu führt, dass die Rotornabe sich beim Heben aus einer senkrechten Ausrichtung bzw. Position in eine Montageposition mit im Wesentlichen waagerechter Nabenachse dreht. Hierfür ist ein Befestigungsabschnitt am Ringflansch eines Blattanschlusses bzw. am Blattflanschlager befestigt, wobei dieser Befestigungsabschnitt auch als Hebevorrichtung bezeichnet werden kann. Die Handhabungsvorrichtung umfasst somit ein Gestell mit einem Tragrahmen 32, der beispielsweise auf einem Tieflader platziert werden kann, und mit angelenktem Nabengestell 30, das an der Rotornabe 1 befestigt ist. Insbesondere wird eine Rotornabe 1 in einer temporären Fertigungshalle, die auch als Minifabrik bezeichnet werden kann, auf einem Gelände für einen geplanten Windpark gefertigt. Diese Fertigung beinhaltet die Anordnung der Nabenverkleidung. So vorbereitet wird die Nabe zu der jeweiligen zu errichtenden Windenergieanlage geliefert. Beim Anheben der Hebevorrichtung dreht sich die Nabe dann direkt in ihre Installationsposition.

Es wird somit eine Lösung geschaffen, die die Installation einer Windenergieanlage, insbesondere die Installation der Rotornabe vereinfacht. Insbesondere kann die Rotornabe auf einem Gestell vormontiert werden, einschließlich Verkleidungsteile. Das Montagegestell bzw. Nabengestell wird mit einem Tragrahmen, insbesondere über eine Gelenkverbindung, verbunden. Eine Hebevorrichtung wird an einem Befestigungsabschnitt und/oder wird an einem Blattflanschlager montiert. Ein Montagekran hebt die Rotornabe an der Hebevorrichtung an und die Rotornabe dreht sich dabei in Montageposition mithilfe der Aufrichtvorrichtung.

Nach Erreichen der Montageposition wird das Vormontagegestell gelöst und der Montagekran kann dann die Rotornabe weiter anheben. Nach erfolgter Montage der Rotornabe wird die Hebevorrichtung jedenfalls demontiert.

Besondere Vorteile bestehen darin, dass die Rotornabe vollständig vormontiert werden kann, jedenfalls können sehr viele Elemente vormontiert werden. Dadurch werden Kranhübe reduziert. Beispielsweise entfällt ein weiterer Installationsschritt mit entsprechendem Kranhub für das Montieren einer Nabenverkleidung oder eines Teils davon oder eines Schleifringkörpers. Entsprechend können auch Montagezeiten mit Montagekran reduziert werden mit entsprechenden Einsparungen. Zudem kann die Qualität durch eine Vormontage am Boden verbessert werden.

## Patentansprüche

1. Rotornabe (1) einer Windenergieanlage (100), mit
- einer Handhabungsvorrichtung zum Heben der Rotornabe (1) mittels eines Krans zum Montieren der Rotornabe (1) an einer auf einem Windenergieanlagenturm angeordneten Gondel (104), wobei
- die Handhabungsvorrichtung dazu vorbereitet ist, dass sich die Rotornabe (1) beim Anheben an einem Befestigungsabschnitt (14) der Handhabungsvorrichtung von einer senkrechten Ausrichtung mit im Wesentlichen senkrechter Nabenachse (28) in eine waagerechte Ausrichtung mit im Wesentlichen horizontaler Nabenachse (28) dreht,
**dadurch gekennzeichnet, dass** die Handhabungsvorrichtung ein
- Vormontagegestell (2) umfasst, zum Tragen der Rotornabe (1) in der senkrechten Ausrichtung darauf mit
- einem Gelenkabschnitt (34) zum Führen der Drehung der Rotornabe (1) von der senkrechten Ausrichtung in die waagerechte Ausrichtung.

2. Rotornabe (1) nach Anspruch 1,
**gekennzeichnet durch** wenigstens einen Blattanschluss mit einem Ringflansch zum direkten oder indirekten Befestigen eines Rotorblattes (108) daran und/oder einer Nabenverkleidung (4) mit wenigstens einer Rotorblattöffnung (6) zum Durchführen eines Rotorblattes (108), wobei der Befestigungsabschnitt (14) der Handhabungsvorrichtung an dem Ringflansch (24) befestigt ist, und/oder so in der Rotornabe (1) angeordnet ist, dass er **durch** die Rotorblattöffnung (6) ragt oder zum Anheben und Drehen der Rotornabe (1) von der senkrechten in die waagerechte Ausrichtung ein Hebezeug (18) eines Krans durch die Rotorblattöffnung (6) hindurch an dem Befestigungsabschnitt (14) befestigt wird.

3. Rotornabe (1) nach einem der Ansprüche 1 oder 2,
**dadurch gekennzeichnet, dass** das Vormontagegestell (2) an einem konzentrisch zur Nabenachse (28) angeordneten Läuferflansch befestigt ist.

4. Rotornabe (1) nach einem der vorstehenden Ansprüche,
**dadurch gekennzeichnet, dass** die Rotornabe (1) zum festen Verbinden mit einem Läufer eines Generators einer getriebelosen Windenergieanlage (100) vorbereitet ist.

5. Rotornabe (1) nach einem der vorstehenden Ansprüche,
**dadurch gekennzeichnet, dass** die Rotornabe (1) mit einer Nabenverkleidung (4) versehen ist und die Handhabungsvorrichtung so ausgestaltet ist, dass die Nabenverkleidung (4) bei dem Drehen von der senkrechten in die waagerechte Ausrichtung nicht beschädigt wird, insbesondere, dabei keinen Kontakt mit dem Boden hat, auf dem sie steht und keinen Kontakt mit dem Hebezeug (18) hat, das an dem Befestigungsabschnitt (14) befestigt ist.

6. Rotornabe (1) nach einem der vorstehenden Ansprüche,
**dadurch gekennzeichnet, dass** ein Schleifringkörper zum Übertragen elektrischer Signale zwischen der Rotornabe (1) und der Gondel in der Rotornabe (1) vorinstalliert ist und/oder, dass eine Spinnerkappe vorinstalliert ist.

7. Handhabungsvorrichtung zum Heben einer Rotornabe (1) mittels eines Krans zum Montieren der Rotornabe (1) an einer auf einem Windenergieanlagenturm (102) angeordneten Gondel (104), wobei
- die Handhabungsvorrichtung dazu vorbereitet ist, dass sich die Rotornabe (1) beim Anheben an einem Befestigungsabschnitt (14) der Handhabungsvorrichtung von einer senkrechten Ausrichtung mit im Wesentlichen senkrechter Nabenachse in eine waagerechte Ausrichtung mit im Wesentlichen horizontaler Nabenachse dreht
**dadurch gekennzeichnet, dass** die Handhabungsvorrichtung ein
- Vormontagegestell (2) umfasst, zum Tragen der Rotornabe (1) in der senkrechten Ausrichtung darauf mit
- einem Gelenkabschnitt (34) zum Führen der Drehung der Rotornabe (1) von der senkrechten Ausrichtung in die waagerechte Ausrichtung.

8. Handhabungsvorrichtung nach Anspruch 7, wobei die Handhabungsvorrichtung zur Verwendung mit einer Rotornabe (1) nach einem der Ansprüche 1 bis 6 vorbereitet ist, insbesondere Merkmale der in den Ansprüchen 1 bis 6 beanspruchten Handhabungsvorrichtung aufweist.

9. Transportfahrzeug zum Bereitstellen einer Rotornabe, wobei das Transportfahrzeug eine Handhabungsvorrichtung nach Anspruch 7 oder 8 aufweist.

10. Verfahren zum Montieren einer Rotornabe (1) einer Windenergieanlage (100), umfassend die Schritte:
- Bereitstellen einer Rotornabe (1) in einer senkrechten Ausrichtung mit senkrechter Nabenachse,
- Befestigen eines Hebezeugs (18) eines Krans an einem Befestigungsabschnitt (14) einer Handhabungsvorrichtung der Rotornabe,
- Heben der Rotornabe (1) unmittelbar aus der senkrechten Ausrichtung so, dass sich die Rotornabe (1) beim Anheben aus der senkrechten Ausrichtung in eine waagerechte Ausrichtung mit horizontaler Nabenachse (28) dreht und
- Montieren der Rotornabe (1) an einer auf einem Turm (102) oder Mast angeordneten Gondel (104)
wobei eine Handhabungsvorrichtung verwendet wird, die ein
- Vormontagegestell (2) umfasst, zum Tragen der Rotornabe (1) in der senkrechten Ausrichtung darauf mit
- einem Gelenkabschnitt (34) zum Führen der Drehung der Rotornabe (1) von der senkrechten Ausrichtung in die waagerechte Ausrichtung.

11. Verfahren nach Anspruch 10, wobei eine Rotornabe (1) nach einem der Ansprüche 1 bis 6 verwendet wird und/oder ein Schleifringkörper, eine Spinnerkappe und/oder eine Nabenverkleidung (4) vorinstalliert ist bzw. sind.

## Claims

1. Rotor hub (1) of a wind turbine (100), having
- a handling device for lifting the rotor hub (1) by means of a crane for assembling the rotor hub (1) on a pod (104) which is arranged on a wind turbine tower, wherein
- the handling device is provided so that, when being lifted at a fixing portion (14) of the handling device, the rotor hub (1) rotates from a perpendicular orientation with a substantially perpendicular hub axis (28) into a horizontal orientation with a substantially horizontal hub axis (28), **characterised in that** the handling device comprises
- a pre-assembly frame (2) for carrying the rotor hub (1) in the perpendicular orientation thereon, with
- an articulated portion (34) for guiding the rotation of the rotor hub (1) from the perpendicular orientation into the horizontal orientation.

2. Rotor hub (1) according to claim 1,
**characterised by** at least one blade connection having an annular flange for directly or indirectly securing a rotor blade (108) thereto and/or a hub casing (4) having at least one rotor blade opening (6) for the passage of a rotor blade (108), wherein the securing portion (14) of the handling device is secured to the annular flange (24), and/or is arranged in the rotor hub (1) in such a manner that it protrudes through the rotor blade opening (6) or, for lifting and rotating the rotor hub (1) from the perpendicular into the horizontal orientation, a lifting unit (18) of a crane is fixed through the rotor blade opening (6) to the fixing portion (14).

3. Rotor hub (1) according to either claim 1 or claim 2,
**characterised in that** the pre-assembly frame (2) is secured to a rotor flange arranged concentrically relative to the hub axis (28).

4. Rotor hub (1) according to any one of the preceding claims, **characterised in that** the rotor hub (1) is provided for fixed connection to a rotor of a generator of a gearless wind turbine (100).

5. Rotor hub (1) according to any one of the preceding claims, **characterised in that** the rotor hub (1) is provided with a hub casing (4) and the handling device is configured in such a manner that the hub casing (4) does not become damaged during rotation from the perpendicular into the horizontal orientation, in particular has no contact with the ground on which it is standing and has no contact with the lifting unit (18) which is fixed to the fixing portion (14).

6. Rotor hub (1) according to any one of the preceding claims, **characterised in that** a slip ring body for the transmission of electric signals between the rotor hub (1) and the pod is pre-installed in the rotor hub (1) and/or **in that** a spinner cap is pre-installed.

7. Handling device for lifting a rotor hub (1) by means of a crane for mounting the rotor hub (1) on a pod (104) which is arranged on a wind turbine tower (102), wherein
- the handling device is provided so that, when being lifted at a fixing portion (14) of the handling device, the rotor hub (1) rotates from a perpendicular orientation with a substantially perpendicular hub axis into a horizontal orientation with a substantially horizontal hub axis.
**characterised in that** the handling device comprises
- a pre-assembly frame (2) for carrying the rotor hub (1) in the perpendicular orientation thereon, with
- an articulated portion (34) for guiding the rotation of the rotor hub (1) from the perpendicular orientation into the horizontal orientation.

8. Handling device according to claim 7, wherein the handling device is provided for use with a rotor hub (1) according to any one of claims 1 to 6, and in particular has features of the handling device claimed in claims 1 to 6.

9. Transport vehicle for providing a rotor hub, wherein the transport vehicle has a handling device according to claim 7 or claim 8.

10. Method for assembling a rotor hub (1) of a wind turbine (100) comprising the steps of:
- providing a rotor hub (1) in a perpendicular orientation with a perpendicular hub axis,
- fixing a lifting unit (18) of a crane to a fixing portion (14) of a handling device of the rotor hub,
- lifting the rotor hub (1) directly out of the perpendicular orientation in such a manner that, when being lifted, the rotor hub (1) rotates out of the perpendicular orientation into a horizontal orientation with a horizontal hub axis (28), and
- mounting the rotor hub (1) on a pod (104) arranged on a tower (102) or mast,
wherein there is used a handling device which comprises
- a pre-assembly frame (2) for carrying the rotor hub (1) in the perpendicular orientation thereon, with
- an articulated portion (34) for guiding the rotation of the rotor hub (1) from the perpendicular orientation into the horizontal orientation.

11. Method according to claim 10, wherein a rotor hub (1) according to any one of claims 1 to 6 is used, and/or a slip ring body, a spinner cap and/or a hub casing (4) is/are pre-installed.

## Revendications

1. Moyeu de rotor (1) d'une éolienne (100) avec
- un dispositif de manipulation pour le levage du moyeu de rotor (1) à l'aide d'une grue pour le montage du moyeu de rotor (1) sur une nacelle (104) disposée sur une tour d'éolienne,
- le dispositif de manipulation étant préparé afin que le moyeu de rotor (1) se tourne, lors du levage, sur une section de fixation (14) du dispositif de manipulation, d'une orientation verticale avec un axe de moyeu (28) sensiblement vertical à une orientation horizontale avec un axe de moyeu (28) sensiblement horizontal, **caractérisé en ce que** le dispositif de manipulation comporte
- un bâti de prémontage (2) pour le support du moyeu de rotor (1) dans l'orientation verticale dessus avec
- une section articulée (34) pour le guidage de la rotation du moyeu de rotor (1) de l'orientation verticale à l'orientation horizontale.

2. Moyeu de rotor (1) selon la revendication 1, **caractérisé par** au moins un raccord de pale avec une bride annulaire pour la fixation directe ou indirecte d'une pale de rotor (108) dessus et/ou d'un revêtement de moyeu (4) avec au moins une ouverture de pale de rotor (6) pour le passage d'une pale de rotor (108), la section de fixation (14) du dispositif de manipulation étant fixée sur la bride annulaire (24) et/ou étant disposée dans le moyeu de rotor (1) de sorte qu'elle pénètre par l'ouverture de pale de rotor (6) ou un engin de levage (18) d'une grue soit fixé pour le levage et la rotation du moyeu de rotor (1) de l'orientation verticale à l'orientation horizontale par l'ouverture de pale de rotor (6) sur la section de fixation (14).

3. Moyeu de rotor (1) selon l'une quelconque des revendications 1 et 2,
**caractérisé en ce que** le bâti de prémontage (2) est fixé sur une bride de rotor agencée concentriquement à l'axe de moyeu (28).

4. Moyeu de rotor (1) selon l'une quelconque des revendications précédentes,
**caractérisé en ce que** le moyeu de rotor (1) est préparé pour la liaison fixe avec un rotor d'un générateur d'une éolienne sans transmission (100).

5. Moyeu de rotor (1) selon l'une quelconque des revendications précédentes,
**caractérisé en ce que** le moyeu de rotor (1) est pourvu d'un revêtement de moyeu (4) et le dispositif de manipulation est configuré de sorte que le revêtement de moyeu (4) ne soit pas endommagé lors de la rotation de l'orientation verticale à l'orientation horizontale, en particulier n'ait aucun contact avec le sol, sur lequel il se trouve et n'ait aucun contact avec l'engin de levage (18) qui est fixé sur la section de fixation (14).

6. Moyeu de rotor (1) selon l'une quelconque des revendications précédentes,
**caractérisé en ce qu'**un corps de bague collectrice est préinstallé pour la transmission de signaux électriques entre le moyeu de rotor (1) et la nacelle dans le moyeu de rotor (1) et/ou **en ce qu'**un capot de moyeu est préinstallé.

7. Dispositif de manipulation pour le levage d'un moyeu de rotor (1) à l'aide d'une grue pour le montage du moyeu de nacelle (1) sur une nacelle (104) disposée sur une tour d'éolienne (102),
- le dispositif de manipulation étant préparé afin que le moyeu de rotor (1) se tourne, lors du levage, sur une section de fixation (14) du dispositif de manipulation, d'une orientation verticale avec un axe de moyeu sensiblement vertical à une orientation horizontale avec un axe de moyeu sensiblement horizontal,
**caractérisé en ce que** le dispositif de manipulation comporte
- un bâti de prémontage (2) pour le support du moyeu de rotor (1) dans l'orientation verticale dessus avec
- une section articulée (34) pour le guidage de rotation du moyeu de rotor (1) de l'orientation verticale à l'orientation horizontale.

8. Dispositif de manipulation selon la revendication 7, le dispositif de manipulation étant préparé pour l'utilisation avec un moyeu de rotor (1) selon l'une quelconque des revendications 1 à 6, en particulier présente des caractéristiques du dispositif de manipulation revendiqué dans les revendications 1 à 6.

9. Véhicule de transport pour la mise à disposition d'un moyeu de rotor, le véhicule de transport présentant un dispositif de manipulation selon la revendication 7 ou 8.

10. Procédé de montage d'un moyeu de rotor (1) d'une éolienne (100), comprenant les étapes suivantes :
- la mise à disposition d'un moyeu de rotor (1) dans une orientation verticale avec un axe de moyeu vertical,
- la fixation d'un engin de levage (18) d'une grue sur une section de fixation (14) d'un dispositif de manipulation du moyeu de rotor,
- le levage du moyeu de rotor (1) directement de l'orientation verticale de sorte que le moyeu de rotor (1) se tourne, lors du levage, de l'orientation verticale à une orientation horizontale avec un axe de moyeu horizontal (28) et
- le montage du moyeu de rotor (1) sur une nacelle (104) disposée sur une tour (102) ou un mât,
un dispositif de manipulation étant utilisé, lequel comporte
- un bâti de prémontage (2) pour le support du moyeu de rotor (1) dans l'orientation verticale dessus avec
- une section articulée (34) pour le guidage de la rotation du moyeu de rotor (1) de l'orientation verticale à l'orientation horizontale.

11. Procédé selon la revendication 10, un moyeu de rotor (1) selon l'une quelconque des revendications 1 à 6 étant utilisé et/ou un corps de bague collectrice, un capot de moyeu et/ou un revêtement de moyeu (4) étant préinstallé(s).
